# EUROPEAN PATENT APPLICATION

(11) **EP 2 640 048 A1**
(43) Date of publication of application: **18.09.2013**
(21) Application number: 11849276.8
(22) Date of filing: 25.05.2011
(51) Int. Cl.: H04M 3/30, H04B 3/46, H04L 12/26

(54) **PASSIVE OPTICAL NETWORK TERMINAL, SYSTEM AND METHOD FOR TESTING SUBSCRIBER LINES**

(30) Priority: 15.12.2010 CN 201010589213
(71) Applicant: ZTE Corporation, Shenzhen, Guangdong 518057 (CN)
(72) Inventor: DUAN, Zhenwei, Shenzhen Guangdong 518057 (CN)
(74) Representative: Bokinge, Ole
(86) International application number: PCT/CN2011/074636
(87) International publication number: WO 2012/079338

(57) **Abstract**

A passive optical network terminal, system and method for implementing a subscriber line test are provided in the present document. The terminal includes a subscriber line interface module, a subscriber line driver module, a subscriber line resource management module and a Digital Signal Processing (DSP) module connected in sequence, wherein: the subscriber line interface module is configured to provide an analog interface; the subscriber line driver module is configured to: drive the corresponding hardware of a subscriber line through the analog interface, and output a detected subscriber line status to the subscriber line resource management module; the subscriber line resource management module is configured to: according to the subscriber line status, establish or release a media channel between a media server and the subscriber line resource management module under control of the Soft Switch (SS), output a test service prompt voice packet delivered by the media channel to the DSP module, and upload a test command packet packed by the DSP module to the SS; and the DSP module is configured to: unpack the test service prompt voice packet to output to a subscriber set for broadcasting, and after detecting a test command selected by the subscriber set, pack and output the test command to the subscriber line resource management module.

## Description

### Technical Field

The present document relates to the subscriber line fault testing technique in the field of electro-communication, and particularly, to a passive optical network terminal, system and method for implementing a subscriber line test.

### Background of the Related Art

Subscriber lines refer to links between an installation site of user equipment and a local telecommunications office proving services. A traditional telecommunication network, i.e. a Public Switched Telephone Network (PSTN), mainly provides analog subscriber line access, which implements voice communication requirements of users. The PSTN is a circuit switching service based on standard telephone lines, and is used as a connection method for connecting a remote endpoint.

With the development of the communication technique, especially the rise of transmission modes represented by the Internet Protocol (IP) technique and optical communication technique and so on, the circuit switching of the PSTN has been gradually replaced by the Voice over Internet Protocol (VOIP) technique with the core of IP. The PSTN will gradually withdrew from the historical stage, and an objective of combining the three networks, i.e. a telecommunication network, a computer network and a cable television network, grows up step by step.

But for billions of families and personal users, a traditional telephone has become an essential device in the family, work and life, and it may not be eliminated for a long time. Therefore, though access schemes such as Fiber To The Home (FTTH), FTT- Building (FTTB) and FTT-Office (FTTO) and so on take the optical communication and IP as the core at present, an essential part is still supplying the traditional analog line access in a terminal device of subscriber access terminal to implement voice communication.

Since the number of people using the analog line access is large, and the situation of user sites is comparatively complicated, the possibility of occurrence of subscriber line faults is also great. Therefore, performing necessary testing and fault diagnosis on the subscriber lines seems extremely important for telecommunication service providers. In an FTTx (x representing -H, -B and -O) optical access scheme, a Passive optical network (PON) terminal acting as an access terminal is generally in a user's home and a building where the user is located. When faults occur in the subscriber lines, the users will complain to the telecommunication service providers. After receiving the complaint, the telecommunication service providers need to send people to perform a line test and fault processing on the site. It is undoubtedly required to expend large amount of manpower, material resources and time, which conflicts with the developmental requirements of the communication technique.

### Summary of the Invention

The technical problem required to be solved by the present document is to provide a passive optical network terminal, system and method for implementing a subscriber line test, which can implementing the subscriber line test automatically, intelligently and remotely.

In order to solve the above technical problem, the present document provides a passive optical network terminal for implementing a subscriber line test, which comprises a subscriber line interface module, a subscriber line driver module, a subscriber line resource management module and a digital signal processing module connected in sequence, wherein:
the subscriber line interface module is configured to: provide a standard analog interface with respect to corresponding hardware of a subscriber line;
the subscriber line driver module is configured to: drive the corresponding hardware of the subscriber line through the analog interface, and output a detected subscriber line status to the subscriber line resource management module;
the subscriber line resource management module is configured to: according to the subscriber line status, establish or release a media channel between the subscriber line resource management module and a media server under control of a soft switch device; output a test service prompt voice packet delivered by the media server through the media channel to the digital signal processing module, and upload a test command packet packed by the digital signal processing module to the soft switch device; and
the digital signal processing module is configured to: unpack the test service prompt voice packet to output to a subscriber set through the analog interface for broadcasting, and after detecting a test command selected by the subscriber set, pack and output the test command to the subscriber line resource management module.

Preferably, the subscriber line status detected by the subscriber line driver module comprises any one of following statuses: off-hook, data transmission, test, ring and on-hook.

Preferably, the passive optical network terminal further comprises a test command management module and a fault analysis result reporting module, wherein:
the subscriber line resource management module is further configured to: parse out a test command from the test command packet sent by the soft switch device to output to the test command management module; and pack a test report delivered by the subscriber line driver module to upload to the soft switch device;
the test command management module is configured to: output test items parsed out from the test command to the subscriber line driver module, process test data returned by the subscriber line driver module into test results, and output the test results to the fault analysis result reporting module;
the subscriber line driver module is further configured to: drive corresponding hardware through the analog interface to complete corresponding test items according to the test items, and return test data of the corresponding test items to the test command management module;
the fault analysis result reporting module is configured to: analyze the test results according to normal data, form a test report, and deliver the test report to the subscriber line resource management module through the subscriber line driver module.

Preferably, the test items parsed out by the test command management module from the test command comprise one or more of a selection on subscriber lines, a selection on test subitems, a test times and a corresponding testing control; the test subitems comprise one or more of a feed voltage, a loop resistance, a loop current, a ring voltage, an external line voltage, an external line resistance, an amount of ringing current and an external line capacitance of the subscriber lines.

Preferably, the passive optical network terminal further comprises a data base, wherein:
the fault analysis result reporting module is configured to: analyze the test results according to the normal data saved in the data base, and/or analyze line fault reasons with respect to test results indicating line faults, form the test report, deliver the test report to the subscriber line resource management module and meanwhile save the test report into the data base;
the data base is configured to: save the normal data and the test report; the normal data comprise one or more of standard line characteristic parameters, test model data and abnormal line model data.

Preferably, the subscriber line resource management module is further configured to: output a test report voice packet returned by the media server through the media channel to the digital signal processing module;
the digital signal processing module is further configured to: unpack the test report voice packet output by the subscriber line resource management module to output to the subscriber set through the analog interface for broadcasting.

In order to solve the above technical problem, the present document provides a system using the foregoing passive optical network terminal to implement a subscriber line test, which comprises a media server, a soft switch device and a protocol layer interface connected in sequence, and further comprises a first passive optical network terminal, a first subscriber set, a second passive optical network terminal, and a second subscriber set, wherein:
the media server is configured to: under control of the soft switch device, provide a test service prompt voice packet through a media channel established between the media server and the first passive optical network terminal;
the soft switch device is configured to: control to establish the media channel between the media server and the first passive optical network terminal according to a subscriber line status of the first subscriber set; and send a test command uploaded by the first passive optical network terminal to the second passive optical network terminal;
the protocol layer interface is configured to: serve as a protocol interface used for the soft switch device interacting with the first passive optical network terminal and the second passive optical network terminal;
the first passive optical network terminal is configured to: upload the subscriber line status of the first subscriber set to the soft switch device, unpack and output the received test service prompt voice packet to the first subscriber set for broadcasting, and upload a test command selected by the first subscriber set to the soft switch device;
the first subscriber set is configured to: in a process of initiating test services, select the test command according to a test service prompt voice; and
the second passive optical network terminal is configured to: parse out test items from the test command sent by the soft switch device, drive to test subscriber lines of the second subscriber set according to the test items, analyze test results, and form a test report to save in local.

Preferably, the subscriber line status of the first subscriber set comprises any one of following statuses: off-hook, data transmission, test, ring and on-hook;
the first passive optical network terminal is configured to: after detecting an off-hook event of the first subscriber set, report the off-hook event to the soft switch device; detect a number of the first subscriber set according to a number receiving signaling sent by the soft switch device and report the number of the first subscriber set to the soft switch device;
the soft switch device is configured to: after receiving the off-hook event, and after a validity verification on the first subscriber set is passed, send a playback signaling and a number receiving signaling to the first passive optical network terminal; after a service authentication performed on the received number of the first subscriber set is passed, control to establish the media channel.

Preferably, the test items in the test command comprise one or more of a selection on subscriber lines, a selection on test subitems, a test times and a corresponding testing control; the test subitems comprise one or more of a feed voltage, a loop resistance, a loop current, a ring voltage, an external line voltage, an external line resistance, an amount of ringing current and an external line capacitance of the subscriber lines;
the second passive optical network terminal is further configured to: drive to test the subscriber lines according to the test items, analyze the test results, and/or analyze line fault reasons with respect to test results indicating line faults, form the test report, save the test report in local, and meanwhile upload the test report to the soft switch device;
the soft switch device is further configured to: transmit the test report returned by the second passive optical network terminal to the media server;
the media server is further configured to: deliver a packed test report voice packet to the first passive optical network terminal through the media channel; and
the first passive optical network terminal is further configured to: unpack and output the received test report voice packet to the first subscriber set for broadcasting.

In order to solve the above technical problem, the present document provides a method using the foregoing passive optical network terminal to implement a subscriber line test, which comprises:
after a first subscriber set is off-hook, a test service number and a number of second subscriber set are dialed, a first passive optical network terminal reporting a detected number of the first subscriber set to a soft switch device;
the soft switch device negotiating with a media server to establish a media channel between the media server and the first passive optical network terminal according to the received number of the first subscriber set; and the media server transmitting a test service prompt voice to the first passive optical network terminal through the media channel;
the first subscriber set selecting a test command according to the test service prompt voice provided by the first passive optical network terminal, and the first passive optical network terminal delivering the test command selected by the first subscriber set to a second passive optical network terminal through the soft switch device; and
the second passive optical network terminal parsing out test items from the received test command, and driving to test subscriber lines of the second subscriber set according to the test items.

Preferably, the first passive optical network terminal reporting the detected number of the first subscriber set to the soft switch device comprises:
after detecting an off-hook event of the first subscriber set, the first passive optical network terminal reporting the off-hook event to the soft switch device through a protocol layer interface;
after receiving the off-hook event, and after a validity verification on the first subscriber set is passed, the soft switch device sending a playback signaling and a number receiving signaling to the first passive optical network terminal through the protocol layer interface; and
the first passive optical network terminal detecting the number of the first subscriber set according to the number receiving signaling, and reporting the number of the first subscriber set to the soft switch device.

Preferably, the soft switch device negotiating with the media server to establish the media channel between the media server and the first passive optical network terminal according to the received number of the first subscriber set comprises:
after receiving the number of the first subscriber set, the soft switch device performing a service authentication on the number of the first subscriber set, and if the service authentication is passed, the soft switch device negotiating with the media server to establish the media channel between the media server and the first passive optical network terminal.

Preferably, the test items in the test command comprise one or more of a selection on subscriber lines, a selection on test subitems, a test times and a corresponding testing control; the test subitems comprise one or more of a feed voltage, a loop resistance, a loop current, a ring voltage, an external line voltage, an external line resistance, an amount of ringing current and an external line capacitance of the subscriber lines.

Preferably, the method further comprises:
the second passive optical network terminal analyzing test results according to normal data saved locally, and/or analyzing line fault reasons with respect to test results indicating line faults, forming a test report, and uploading the test report to the soft switch device; wherein, the normal data comprise one or more of standard line characteristic parameters, test model data and abnormal line model data;
the soft switch device delivering the test report to the media server, and the media server broadcasting a test report voice to the first subscriber set through the media channel.

Preferably, while the second passive optical network terminal uploads the test report to the soft switch device, the method further comprises: saving the test report in local.

Compared with the related art, in the present document, internal and external line test functions of the subscriber lines implemented in the PON terminal include: a feed voltage, a loop resistance, a loop current, a ring voltage, an external line voltage, an external line resistance, an amount of ringing current and an external line capacitance and so on, which breaks through the traditional way of testing depending on manually operated instrument, and implements the automation and intelligent of subscriber line test. In addition, in the present document, a method for implementing a remote line interoperability test is further provided, a subscriber set A is off-hook, and a test service number and a number of a subscriber set B are dialed, and the subscriber line B can be tested, which enables a tester to complete the test without going to the site of subscriber terminal, thereby improving the efficiency of line fault analysis and positioning.

### Brief Description of Drawings

FIG. 1 is a schematic diagram of a structure of a passive optical network terminal for implementing the subscriber line test according to the example of the present document.
FIG. 2 is a schematic diagram of a system for implementing the subscriber line test according to the example of the present document.
FIG. 3 is a schematic diagram of a specific application scenario according to the example of the system shown in FIG. 2.
FIG. 4 is a flow diagram of a method for implementing the subscriber line test according to the example of the present document.

### Preferred Embodiments of the Invention

The technical scheme of the present document will be described in detail in combination with the accompanying drawings and preferred examples below. The examples illustrated below are only used to describe and explain the present document, but do not constitute a limitation on the technical scheme of the present document.

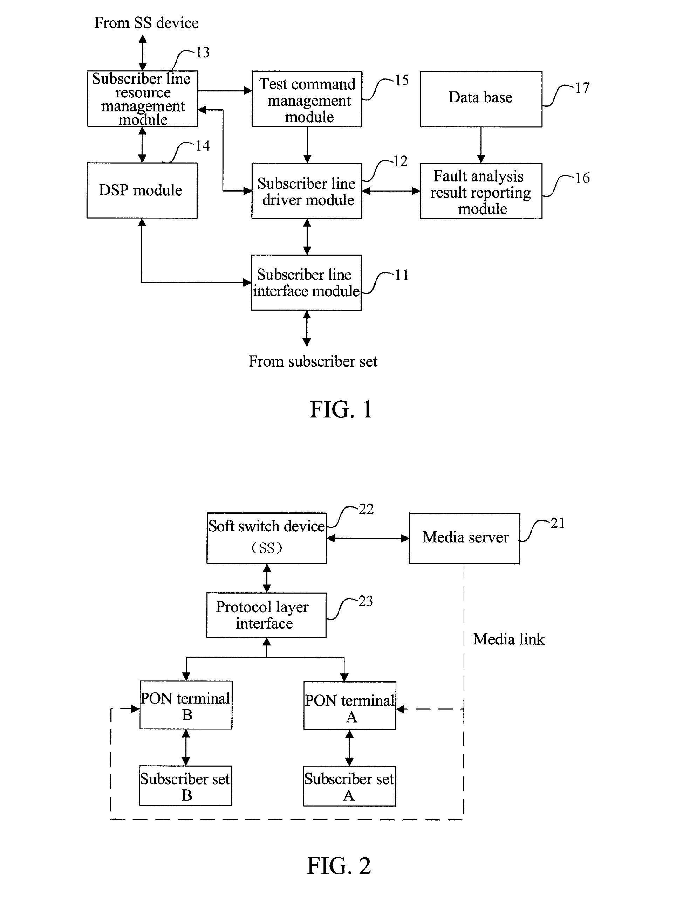

As shown in FIG. 1, a structure of a Passive Optical Network (PON) terminal for implementing the subscriber line test according to the example of the present document is presented, which includes: a subscriber line interface module 11, a subscriber line driver module 12, a subscriber line resource management module 13 and a Digital Signal Processing (DSP) module 14 connected in sequence, wherein:
the subscriber line interface module is configured to: provide a standard analog interface with respect to hardware corresponding to the feed output, ring control, line status control and voice signal encoding and decoding of a subscriber line;
the subscriber line driver module is configured to: drive the corresponding hardware of the subscriber line through the analog interface, and output a detected subscriber line status to the subscriber line resource management module;
the subscriber line status includes any one of following statuses: off-hook, data transmission, test, ring and on-hook.

The subscriber line resource management module is configured to: upload the subscriber line status to a Soft Switch (SS) device through a protocol layer interface, establish a media channel between the subscriber line resource management module and a media server under the control of the SS device, and output a test service prompt voice packet delivered by the media server through the media channel to the DSP module;
the DSP module is configured to: unpack the test service prompt voice packet, and output the unpacked test service prompt voice packet to a subscriber set through the analog interface for broadcasting.

The DSP module packs a test command selected by the subscriber set and detected through Dual Tone Multi Frequency (DTMF) to output to the subscriber line resource management module;
the subscriber line resource management module uploads the test command packed by the DSP module to the SS device through the protocol layer interface.

The example of the PON terminal shown in FIG. 1 also includes a test command management module 15, a fault analysis result reporting module 16 and a data base 17, wherein:
the subscriber line resource management module parses out the test command from the test command packet sent by the SS device to output to the test command management module; and pack a test report delivered by the subscriber line driver module to upload to the SS device;
the test command management module is configured to: output test items parsed out from the test command to the subscriber line driver module, process test data returned by the subscriber line driver module into test results, and output the test results to the fault analysis result reporting module;
the test items parsed out by the test command management module from the test command include one or more of a selection on subscriber lines, a selection on test subitems, a test times and a corresponding testing control; the test subitems comprise one or more of a feed voltage, a loop resistance, a loop current, a ring voltage, an external line voltage, an external line resistance, an amount of ringing current and an external line capacitance of the subscriber lines.

The subscriber line driver module drives the corresponding hardware through the analog interface to complete corresponding test items according to the test items, and returns test data of the corresponding test items to the test command management module;
the fault analysis result reporting module is configured to: analyze the test results according to the normal data saved in the data base, and/or analyze line fault reasons with respect to test results indicating line faults, form a test report, and deliver the test report to the subscriber line resource management module through the subscriber line driver module;
the data base is configured to: save the normal data, which includes one or more of standard line characteristic parameters, test model data and abnormal line model data.

While delivering the test report to the subscriber line resource management module, the fault analysis result reporting module also saves the test report in the data base to facilitate the tracking analysis for the line fault problems.

The subscriber line resource management module outputs a test report voice packet returned by the media server to the DSP module;
the DSP module unpacks the test report voice packet output by the subscriber line resource management module to output to the subscriber set for broadcasting.

FIG. 2 represents a structure of the example of system which uses the example of PON terminal shown in FIG. 1 to implement the subscriber line test in the present document, which includes a media server 21, a soft switch device 22 and a protocol layer interface 23 connected in sequence, and further includes a PON terminal A, a subscriber set A, a PON terminal B, a subscriber set B, wherein:
the media server is configured to: under control of the soft switch device, provide test service prompt voice through a media channel established between the media server and the PON terminal A;
the soft switch device is configured to: interact with the PON terminal through the protocol layer interface, and control to establish the media channel between the media server and the PON terminal; and send a test command uploaded by the PON terminal A to the PON terminal B;
the protocol layer interface is configured to: serve as a protocol interface used for the soft switch device interacting with the PON terminals;
the PON terminal A is configured to: upload the subscriber line status of the subscriber set A to the soft switch device through the protocol layer interface, output the received test service prompt voice to the subscriber set A, and upload a test command selected by the subscriber set A to the soft switch device;
the subscriber set A is configured to: in a process of initiating test services, select the test command to deliver to the PON terminal A according to the subscriber line status and the test service prompt voice; and
the subscriber line status of the subscriber set A includes any one of following statuses: off-hook, data transmission, test, ring and on-hook.

The PON terminal B is configured to: parse out test items from the test command received through the protocol layer interface, drive to test subscriber lines of the subscriber set B according to the test items, analyze test results, and form a test report to save in local.

The test items in the test command include one or more of a selection on subscriber lines, a selection on test subitems, a test times and a corresponding testing control; the test subitems include one or more of a feed voltage, a loop resistance, a loop current, a ring voltage, an external line voltage, an external line resistance, an amount of ringing current and an external line capacitance of the subscriber lines.

The PON terminal B analyzes the test results according to the normal data saved locally, and/or analyzes line fault reasons with respect to test results indicating line faults and forms the test report, and returns the test report to the soft switch device through the protocol layer interface;
the normal data locally saved by the PON terminal B include one or more of standard line characteristic parameters, test model data and abnormal line model data.

The soft switch device transmits the test report returned by the PON terminal B to the media server;
the media server delivers the packed test report voice packet to the PON terminal A through the media channel; and
the PON terminal A unpacks the received test report voice packet to output to the subscriber set A for broadcasting.

In the above example of system, the subscriber lines of the subscriber set B are tested through the subscriber set A. In fact, with the example of system of the present document, an interoperability test of subscriber lines can be implemented. When it is required to test the subscriber lines of the subscriber set A through the subscriber set B, the process is similar, and the media channel established by the media server between the media server and the PON terminal B under control of the soft switch device as shown in FIG. 2 provides the test service prompt voice and the test report voice for testing the subscriber lines of the subscriber set A.

The PON terminal in the above example of system can be any one of Optical Network Unit (ONU), Single Family Unit (ONU) and Multiple Dwelling Unit (MDU).

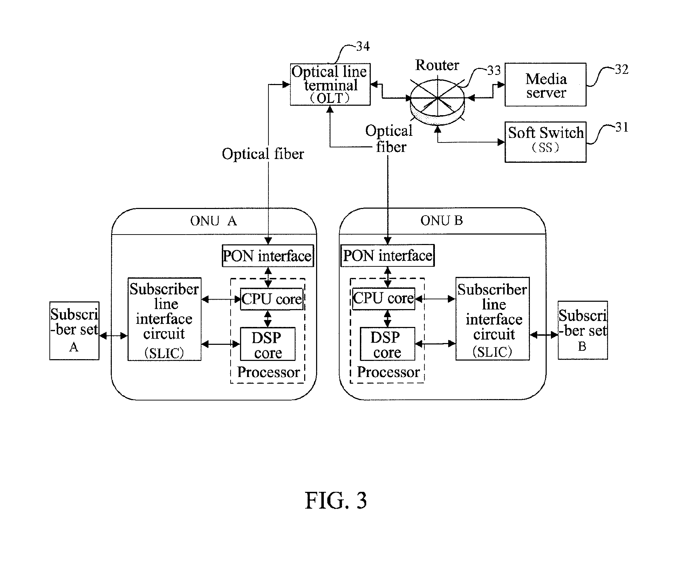

FIG. 3 represents a specific application scenario of the example of system shown in FIG. 2, wherein, with respect to central office equipments, a Soft Switch (SS) device 31 and a media server 32 are connected to an Optical Line Terminal (OLT) 34 through a router 33 to constitute an internetwork; an Optical Network Unit (ONU) is interconnected with the OLT through optical fiber, which implements an interaction between the SS device and media server.

The two ONUs acting as the example of the PON terminal have the same hardware structures, which include a processor and a Subscriber Line Interface Circuit (SLIC), wherein:
the processor is a dual-core microcontroller; a Central Processing Unit (CPU) core is responsible for controlling, which implements controlling on peripheral interface namely Serial Peripheral Interfaces (SPI), storages and network ports and so on, and the entire ONU system runs on the CPU core; and a DSP core is a kernel for processing the VOIP encoding and decoding.

The CPU core and DSP core communicate by sharing memory and internal bus, the CPU core controls the DSP core to process voice data. The CPU core sends a command for controlling the SLIC through the SPI.

The SLIC mainly includes circuits such as a boost and line-cross loop, a signal generator, a codec, and a control logic and so on, and the SLIC provides a standard interface (i.e. a Foreign eXchange Station (FXS)) for connecting to the subscriber set.

After the SLIC samples the voice of the subscriber set and encodes and decodes the voice of the subscriber set with the codec, the SLIC directly delivers the resulted voice to the DSP core through a Time Division Multiplexing module (TDM) bus for processing.

All the function modules in the example of PON terminal for implementing the subscriber line test in the present document are constituted and executed with respect to the above hardware structure.

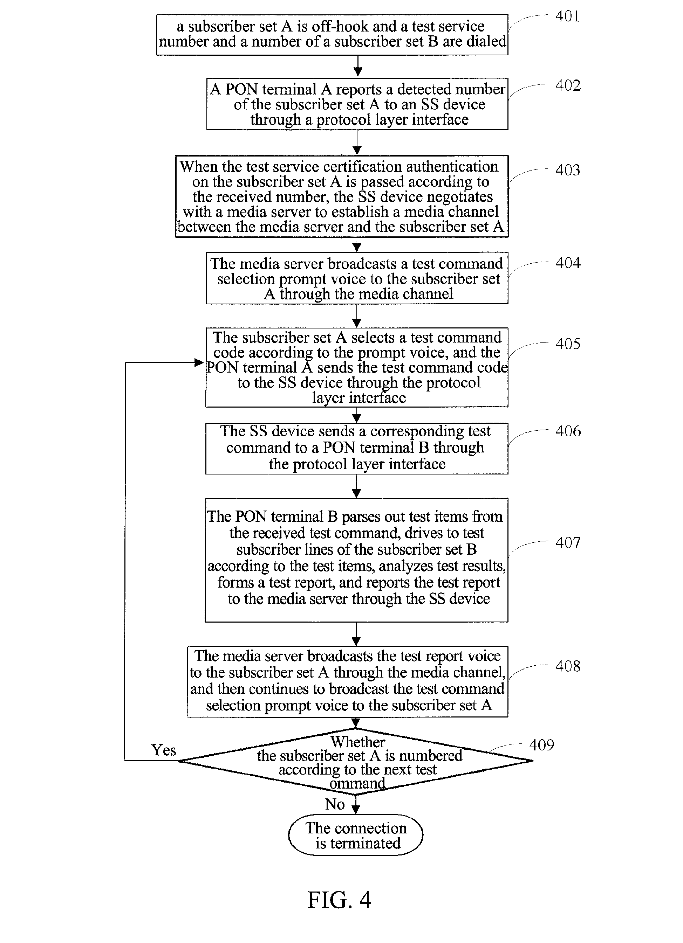

In the present document, with respect to the example of PON terminal shown in FIG. 1, the example of method for implementing the subscriber line test is also provided correspondingly, a flow of the method is as shown in FIG. 4, and the following steps are included.

In step 401, a test service number and a number of a subscriber set B are dialed after a subscriber set A is off-hook.

In step 402, a PON terminal A reports a detected number of the subscriber set A to an SS device through a protocol layer interface.

After detecting an off-hook event of the subscriber set A, the PON terminal A reports the off-hook event to the SS device through the protocol layer interface; after receiving the off-hook event of the subscriber line, and after a validity verification on the subscriber set A is passed, the SS device sends a playback signaling and a number receiving signaling to the PON terminal A through the protocol layer interface; and the PON terminal A detects the number of the subscriber set A according to the number receiving signaling and reports the number of the subscriber set A to the SS device.

In step 403, when the test service certification authentication on the subscriber set A is passed according to the received number, the SS device negotiates with a media server to establish a media channel between the media server and the subscriber set A.

In step 404, the media server broadcasts a test command selection prompt voice to the subscriber set A through the media channel.

In step 405, the subscriber set A selects a test command code according to the prompt voice, and the PON terminal A sends the test command code to the SS device through the protocol layer interface.

In step 406, the SS device sends a corresponding test command to a PON terminal B through the protocol layer interface.

In step 407, the PON terminal B parses out test items from the received test command, drives to test subscriber lines of the subscriber set B according to the test items, analyzes test results, forms a test report, and reports the test report to the media server through the SS device.

The test items in the test command includes one or more of a selection on subscriber lines, a selection on test subitems, a test times and a corresponding testing control; the test subitems comprise one or more of a feed voltage, a loop resistance, a loop current, a ring voltage, an external line voltage, an external line resistance, an amount of ringing current and an external line capacitance of the subscriber lines.

In step 408, the media server broadcasts the test report voice to the subscriber set A through the media channel, and then continues to broadcast the test command selection prompt voice to the subscriber set A.

In step 409, it is to judge whether the subscriber set A is numbered according to the next test command, if yes, it is to return to execute step 405, and if not, the connection is terminated and the flow ends.

In conclusion, it can be seen from the above examples that, the traditional way of testing depending on manually operated instrument is broken through in the present document, and the automation, intelligent and remote of the subscriber line test are implemented. After the subscriber set A is off-hook and a test service number a number of subscriber set B are dialed, and the subscriber line B can be tested, which enables a tester to complete the test without presenting at the site of subscriber terminal, thereby improving the efficiency of line fault analysis and positioning.

The ordinary person skilled in the art can understand that all or part of the steps in the above method can be completed by a program instructing related hardware, and the program can be stored in a computer readable memory medium, such as a read-only memory, disk or optical disk and so on. Alternatively, all or part of the steps of the above examples also can be implemented by using one or more integrated circuits. Correspondingly, each module/unit in the above examples can be implemented in a form of hardware, and also can be implemented in a form of software function module. The present document is not limited to any combination of hardware and software in a specific form.

### Industrial Applicability

With the passive optical network terminal, system and method for implementing the subscriber line test provided in the present document, the traditional way of testing depending on manually operated instrument is broken through, the automation and intelligent of subscriber line test are implemented. In addition, a tester can complete the test without presenting at the site of the subscriber terminal, which improves the efficiency of line fault analysis and positioning.

## Claims

1. A passive optical network terminal for implementing a subscriber line test, comprising a subscriber line interface module, a subscriber line driver module, a subscriber line resource management module and a digital signal processing module connected in sequence, wherein:
the subscriber line interface module is configured to: provide a standard analog interface with respect to corresponding hardware of a subscriber line;
the subscriber line driver module is configured to: drive the corresponding hardware of the subscriber line through the analog interface, and output a detected subscriber line status to the subscriber line resource management module;
the subscriber line resource management module is configured to: according to the subscriber line status, establish or release a media channel between the subscriber line resource management module and a media server under control of a soft switch device; output a test service prompt voice packet delivered by the media server through the media channel to the digital signal processing module, and upload a test command packet packed by the digital signal processing module to the soft switch device; and
the digital signal processing module is configured to: unpack the test service prompt voice packet to output to a subscriber set through the analog interface for broadcasting, and after detecting a test command selected by the subscriber set, pack and output the test command to the subscriber line resource management module.

2. The passive optical network terminal according to claim 1, wherein:
the subscriber line status detected by the subscriber line driver module comprises any one of following statuses: off-hook, data transmission, test, ring and on-hook.

3. The passive optical network terminal according to claim 2, further comprising a test command management module and a fault analysis result reporting module, wherein:
the subscriber line resource management module is further configured to: parse out a test command from the test command packet sent by the soft switch device to output to the test command management module; and pack a test report delivered by the subscriber line driver module to upload to the soft switch device;
the test command management module is configured to: output test items parsed out from the test command to the subscriber line driver module, process test data returned by the subscriber line driver module into test results, and output the test results to the fault analysis result reporting module;
the subscriber line driver module is further configured to: drive corresponding hardware through the analog interface to complete corresponding test items according to the test items, and return test data of the corresponding test items to the test command management module;
the fault analysis result reporting module is configured to: analyze the test results according to normal data, form a test report, and deliver the test report to the subscriber line resource management module through the subscriber line driver module.

4. The passive optical network terminal according to claim 3, wherein:
the test items parsed out by the test command management module from the test command comprise one or more of a selection on subscriber lines, a selection on test subitems, a test times and a corresponding testing control; the test subitems comprise one or more of a feed voltage, a loop resistance, a loop current, a ring voltage, an external line voltage, an external line resistance, an amount of ringing current and an external line capacitance of the subscriber lines.

5. The passive optical network terminal according to claim 4, further comprising a data base, wherein:
the fault analysis result reporting module is configured to: analyze the test results according to the normal data saved in the data base, and/or analyze line fault reasons with respect to test results indicating line faults, form the test report, deliver the test report to the subscriber line resource management module, and meanwhile save the test report into the data base;
the data base is configured to: save the normal data and the test report; wherein the normal data comprise one or more of standard line characteristic parameters, test model data and abnormal line model data.

6. The passive optical network terminal according to any one of claims 3 to 5, wherein:
the subscriber line resource management module is further configured to: output a test report voice packet returned by the media server through the media channel to the digital signal processing module;
the digital signal processing module is further configured to: unpack the test report voice packet output by the subscriber line resource management module to output to the subscriber set through the analog interface for broadcasting.

7. A system using the passive optical network terminal according to claim 1 to implement a subscriber line test, comprising a media server, a soft switch device and a protocol layer interface connected in sequence, and further comprising a first passive optical network terminal, a first subscriber set, a second passive optical network terminal, and a second subscriber set, wherein:
the media server is configured to: under control of the soft switch device, provide a test service prompt voice packet through a media channel established between the media server and the first passive optical network terminal;
the soft switch device is configured to: control to establish the media channel between the media server and the first passive optical network terminal according to a subscriber line status of the first subscriber set; and send a test command uploaded by the first passive optical network terminal to the second passive optical network terminal;
the protocol layer interface is configured to: serve as a protocol interface used for the soft switch device interacting with the first passive optical network terminal and the second passive optical network terminal;
the first passive optical network terminal is configured to: upload the subscriber line status of the first subscriber set to the soft switch device, unpack and output the received test service prompt voice packet to the first subscriber set for broadcasting, and upload a test command selected by the first subscriber set to the soft switch device;
the first subscriber set is configured to: in a process of initiating test services, select the test command according to a test service prompt voice; and
the second passive optical network terminal is configured to: parse out test items from the test command sent by the soft switch device, drive to test subscriber lines of the second subscriber set according to the test items, analyze test results, and form a test report to save in local.

8. The system according to claim 7, wherein:
the subscriber line status of the first subscriber set comprises any one of following statuses: off-hook, data transmission, test, ring and on-hook;
the first passive optical network terminal is configured to: after detecting an off-hook event of the first subscriber set, report the off-hook event to the soft switch device; detect a number of the first subscriber set according to a number receiving signaling sent by the soft switch device and report the number of the first subscriber set to the soft switch device;
the soft switch device is configured to: after receiving the off-hook event, and after a validity verification on the first subscriber set is passed, send a playback signaling and a number receiving signaling to the first passive optical network terminal; after a service authentication performed on the received number of the first subscriber set is passed, control to establish the media channel.

9. The system according to claim 7 or 8, wherein:
the test items in the test command comprise one or more of a selection on subscriber lines, a selection on test subitems, a test times and a corresponding testing control; the test subitems comprise one or more of a feed voltage, a loop resistance, a loop current, a ring voltage, an external line voltage, an external line resistance, an amount of ringing current and an external line capacitance of the subscriber lines;
the second passive optical network terminal is further configured to: drive to test the subscriber lines according to the test items, analyze the test results, and/or analyze line fault reasons with respect to test results indicating line faults, form the test report, save the test report in local, and meanwhile upload the test report to the soft switch device;
the soft switch device is further configured to: transmit the test report returned by the second passive optical network terminal to the media server;
the media server is further configured to: deliver a packed test report voice packet to the first passive optical network terminal through the media channel; and
the first passive optical network terminal is further configured to: unpack and output the received test report voice packet to the first subscriber set for broadcasting.

10. A method using the passive optical network terminal according to claim 1 to implement a subscriber line test, comprising:
after a first subscriber set is off-hook, a test service number and a number of second subscriber set are dialed, a first passive optical network terminal reporting a detected number of the first subscriber set to a soft switch device;
the soft switch device negotiating with a media server to establish a media channel between the media server and the first passive optical network terminal according to the received number of the first subscriber set; and the media server transmitting a test service prompt voice to the first passive optical network terminal through the media channel;
the first subscriber set selecting a test command according to the test service prompt voice provided by the first passive optical network terminal, and the first passive optical network terminal delivering the test command selected by the first subscriber set to a second passive optical network terminal through the soft switch device; and
the second passive optical network terminal parsing out test items from the received test command, and driving to test subscriber lines of the second subscriber set according to the test items.

11. The method according to claim 10, wherein, the first passive optical network terminal reporting the detected number of the first subscriber set to the soft switch device comprises:
after detecting an off-hook event of the first subscriber set, the first passive optical network terminal reporting the off-hook event to the soft switch device through a protocol layer interface;
after receiving the off-hook event, and after a validity verification on the first subscriber set is passed, the soft switch device sending a playback signaling and a number receiving signaling to the first passive optical network terminal through the protocol layer interface; and
the first passive optical network terminal detecting the number of the first subscriber set according to the number receiving signaling, and reporting the number of the first subscriber set to the soft switch device.

12. The method according to claim 10, wherein, the soft switch device negotiating with the media server to establish the media channel between the media server and the first passive optical network terminal according to the received number of the first subscriber set comprises:
after receiving the number of the first subscriber set, the soft switch device performing a service authentication on the number of the first subscriber set, and if the service authentication is passed, negotiating with the media server to establish the media channel between the media server and the first passive optical network terminal.

13. The method according to any one of claims of 10 to 12, wherein,
the test items in the test command comprise one or more of a selection on subscriber lines, a selection on test subitems, a test times and a corresponding testing control; the test subitems comprise one or more of a feed voltage, a loop resistance, a loop current, a ring voltage, an external line voltage, an external line resistance, an amount of ringing current and an external line capacitance of the subscriber lines.

14. The method according to any one of claims of 10 to 12, further comprising:
the second passive optical network terminal analyzing test results according to normal data saved locally, and/or analyzing line fault reasons with respect to test results indicating line faults, forming a test report, and uploading the test report to the soft switch device; wherein, the normal data comprise one or more of standard line characteristic parameters, test model data and abnormal line model data;
the soft switch device delivering the test report to the media server, and the media server broadcasting a test report voice to the first subscriber set through the media channel.

15. The method according to claim 14, wherein, while the second passive optical network terminal uploads the test report to the soft switch device, the method further comprises: saving the test report in local.
